Europäisches Patentamt

(19) European Patent Office

Office européen des brevets

(11) Publication number : **0 517 645 A1**

# (12) EUROPEAN PATENT APPLICATION

(21) Application number : **92610042.1**

(22) Date of filing : **09.06.92**

(51) Int. Cl.⁵ : **A01D 34/73,** A01D 34/68

(30) Priority : **06.06.91 DK 1077/91**

(43) Date of publication of application :
**09.12.92 Bulletin 92/50**

(84) Designated Contracting States :
**DE FR GB SE**

(71) Applicant : **JF-FABRIKEN - J. FREUDENDAHL A/S**
**P.O. Box 180**
**DK-6400 Sonderborg (DK)**

(72) Inventor : **Freudendahl, Jorn**
**6 Voldgade**
**DK-6400 Sonderborg (DK)**
Inventor : **Rasmussen, Laurits**
**26 Sundvaenget**
**DK-6400 Sonderborg (DK)**

(74) Representative : **Raffnsöe, Knud Rosenstand et al**
**Internationalt Patent-Bureau, 23 Höje Taastrup Boulevard**
**DK-2630 Taastrup (DK)**

(54) **Catch for a shaft for mounting a knife in a mower and a knife device comprising such catch.**

(57)    The catch (4) is designed to retain a shaft (3), the axis of which extends transversely through a first member (1) rotatable about a transverse axis (O) comprises a spring biassed member (8) designed to engage with a recess (12) in the shaft (3) in order to keep the shaft solidly against displacement in its longitudinal direction and comprises according to the invention a member (5) with two intersecting bores (6, 7) with mutually skew axes, the first bore (6) being designed to receive the spring biassed member (8) and a spring (9) for biassing said member in the direction towards an abutment (11) and towards an opening (14) at one end of the first bore (6) and the second bore (7) is designed to receive the shaft (3).

Fig. 1

The invention relates to a catch for a shaft for mounting a knife in a mower in which the axis of the shaft extends transversely through a first member rotatable about a transverse axis and comprising a spring biassed member designed to engage with a recess in the shaft in order to keep the shaft firmly against displacement in its longitudinal direction.

The invention further relates to a knife assembly comprising a first member rotatable about a transverse axis and a catch according to the invention.

A catch of this type is known from CH patent No. 659 563.

Another prior catch for use in mounting a knife in a mower is a conventional screw nut. It is, however, desirable to have a catch that is easily and quickly released without the use of special tools in order to detach the knife for exchange.

The catch according to the invention differs from the prior art in that it includes a second member with two intersecting bores with mutually skew axes, that the first bore receives the spring biassed member and a spring for biassing said member in the direction towards an abutment and towards an opening at one end of the first bore, and that the second bore is designed to receive the shaft. A catch is thus obtained which may be released by merely passing a slender member, such as a nail or a thin pin, through the opening at said one end of the first bore and urges the spring biassed member backwards out of engagement with the recess in the shaft.

In an embodiment of the invention the first bore has two parts with mutually different diameters whereby the transition between the two parts forms said abutment and the spring biassed member has a section extending into the bore part with a small diameter. This provides for obtaining a good guidance of the spring biassed member within the bore.

In the knife assembly according to the invention the opening in said one end of the first bore of the catch faces away from the rotational axis of the first member. Thus, it is obtained that said opening by the centrifugal force is kept free of earth, vegetable components and the like. In a further embodiment of the knife assembly according to the invention the second member of the catch has opposite lateral faces facing substantially tangentially in relation to the rotation of the first member and said lateral faces converge in relation to each other in the direction away from the first member. The second member then exerts a lifting effect on material mowed by the mower.

The invention will now be explained in detail by means of an example with reference to the drawings, in which

Fig. 1 is a segment of a knife disc in a disc mower, comprising a catch, in a sectional view along the line A-A in Fig. 2,

Fig. 2 is a vertical section through the knife disc in Fig. 1, and

Fig. 3 is the knife disc, viewed in the direction of the arrows B-B in Fig. 1.

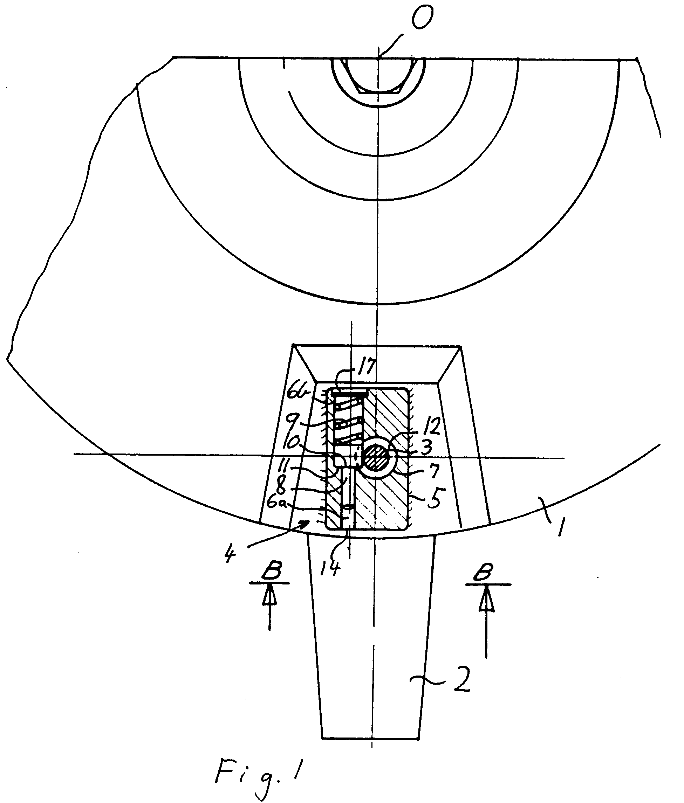

The drawings show a knife assembly in the form of a knife disc 1 known per se of a disc mower and a knife 2. This knife is by means of a bolt 3 pivotally secured to the knife disc 1 which has a rotational axis O perpendicular to the plane of Fig. 1. Bolt 3 is retained by means of a catch 4 according to the invention.

Catch 4 is constituted by a member 5 with two bores 6 and 7, the first bore 6 having two parts 6a and 6b with a relatively small and a relatively large diameter, respectively. Bore 6 is continuous with an opening 14 at the end of part 6b while bore 7 extends from the interface towards knife disc 1 and past bore 6 without being continuous.

The two bores 6 and 7 are positioned so as to engage with each other whereas their axes are mutually skew.

A member 8 with two cylindrical sections whose diameters substantially correspond to the diameters of the two parts 6a and 6b of bore 6 so that member 8 may slide into bore 6 is received in bore 6. Member 8 is actuated by a spring 9 in the direction towards part 6b with the small diameter, whereby the shoulder 10 of member 8 at the transition between the two sections of member 8 is made to abut on the corresponding shoulder 11 at the transition between the two parts 6a and 6b of bore 6. The bore part 6a with the large diameter is preferably closed by an appropriate plug 17.

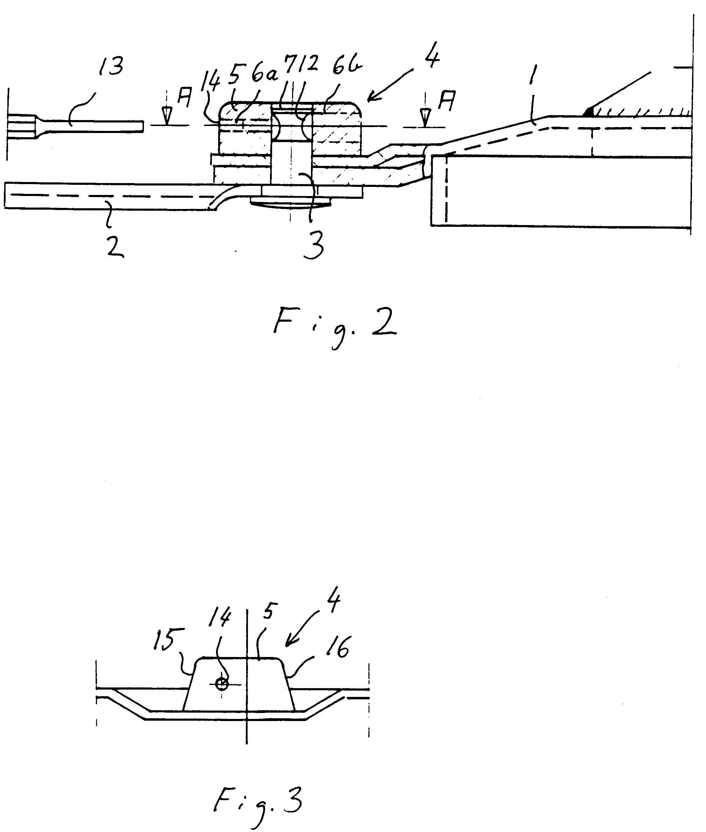

The shaft of bolt 3 has a circumferential recess 12 which, as shown in Fig. 2, is located so that it is on a line with bore 6 when the knife is mounted.

When knife 2 is to be mounted on knife disc 1, member 8 is urged backwards against the force of spring 9 by means of a pin 13, a nail or another slender member to be found in any ordinary tool box. The section of member 8 with the large diameter is thus removed from bore 7 and bolt 3 may be fully inserted. Member 8 is then released and spring 9 passes it forwards so that shoulder 10 abuts on shoulder 11. The section of member 8 with the large diameter is thereby passed into recess 12 of bolt 3, thereby preventing said bolt from moving in its longitudinal direction, whereas it is firmly locked. Knife 2 may be dismounted in a corresponding manner.

As it appears from Fig. 1, the opening 14 of bore part 6a faces away from the rotational axis 0 of knife disc 1. In operation this provides for obtaining that the centrifugal force keeps earth, vegetable matter and the like out of bore 6 so that opening 14 does not get blocked whereby the lock may be operated without hindrance.

As it appears from Figs 1 and 3, member 5 has lateral faces 15 and 16 extending substantially radially in relation to knife disc 1, i.e. in operation they are directed substantially tangentially in relation to the rotation of the knife disc. Said lateral faces 15 and 16 converge in relation to each other in the direction away from knife disc 1, whereby in operation they exert a lifting effect on the mowed material.

## Claims

1. A catch for a shaft (3), in particular for mounting a knife (2) in a mower comprising a spring biassed member (8) designed to engage with a recess (12) in the shaft (3) in order to keep the shaft firmly against displacement in its longitudinal direction, in which a first bore (6) receives the spring biassed member (8) and a spring (9) for biassing said member in the direction towards an abutment (11) and towards an opening (14) at one end (6a) of the first bore (6), characterized in that it includes a member (5) comprising the first bore and a second bore (7) designed to receive the shaft (3) and that the two bores (6, 7) intersect each other with mutually skew axes.

2. A catch according to claim 1, characterized in that the first bore (6) has two parts (6a, 6b) with mutually different diameters, that the transition between the two parts (6a, 6b) forms said abutment (11) and that the spring biassed member (8) has a section extending into the bore part (6a) with a small diameter.

3. A knife assembly comprising a first member (1) rotatable about a transverse axis (O) and a catch (4) according to claims 1 or 2, characterized in that said opening (14) faces away from the rotational axis (O) of the first member (1).

4. A knife assembly according to claim 3, characterized in that the second member (5) has opposite lateral faces (15, 16) extending substantially radially in relation to the axis of rotation of the first member (1) and that said lateral faces converge in relation to each other in the direction away from the first member (1).

Fig. 1

Fig. 2

Fig. 3

**European Patent Office**

# EUROPEAN SEARCH REPORT

Application Number

| DOCUMENTS CONSIDERED TO BE RELEVANT | | | EP 92610042.1 |
|---|---|---|---|
| Category | Citation of document with indication, where appropriate, of relevant passages | Relevant to claim | CLASSIFICATION OF THE APPLICATION (Int. Cl.5) |
| A | DE - A - 2 058 347<br>(STOKEY & SCHMITZ)<br>    * Especially fig. 2,3 * | 1 | A 01 D 34/73<br>A 01 D 34/68 |
| A | AT - B - 353 527<br>(KUHN S.A.)<br>    * Especially fig. 1,3,5,9,<br>      11,15 * | 4 | |
| | | | TECHNICAL FIELDS SEARCHED (Int. Cl.5) |
| | | | A 01 D 34/00 |

The present search report has been drawn up for all claims

| Place of search | Date of completion of the search | Examiner |
|---|---|---|
| VIENNA | 20-08-1992 | SCHNEEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                        
& : member of the same patent family, corresponding document

EPO FORM 1503 03.82 (P0401)